# EUROPÄISCHE PATENTSCHRIFT

(11) **EP 2 649 713 B1**
(45) Veröffentlichungstag und Bekanntmachung des Hinweises auf die Patenterteilung: **31.05.2017**
(21) Anmeldenummer: 11810550.1
(22) Anmeldetag: 09.12.2011
(51) Int. Cl.: H02K 41/03, B65H 54/28

(54) **LINEARMOTOR, INSBESONDERE LINEARMOTOR MIT EINEM PENDELFELD**
LINEAR MOTOR, IN PARTICULAR LINEAR MOTOR HAVING AN OSCILLATING FIELD
MOTEUR LINÉAIRE, EN PARTICULIER MOTEUR LINÉAIRE À CHAMP MAGNÉTIQUE PENDULAIRE

(30) Priorität: 10.12.2010 AT 20392010
(43) Veröffentlichungstag der Anmeldung: 16.10.2013
(73) Patentinhaber: Lunatone Industrielle Elektronik GmbH, 1220 Wien (AT)
(72) Erfinder: MAIR, Alexander, A-2285 Breitstetten (AT)
(74) Vertreter: Patentanwaltskanzlei Matschnig & Forsthuber OG
(86) Internationale Anmeldenummer: PCT/AT2011/050037
(87) Internationale Veröffentlichungsnummer: WO 2012/075519

(56) Entgegenhaltungen:
- WO-A1-03/020624
- WO-A1-2009/092122

## Beschreibung

Die Erfindung betrifft einen Linearmotor mit einem Läufer, welcher Läufer zwischen einem ersten Statorteil und einem diesem gegenüberliegend angeordneten zweiten Statorteil eines Stators verschiebbar gelagert ist, wobei zumindest einer der beiden Statorteile zur Erzeugung eines magnetischen Wanderfeldes vorgesehen ist, und wobei der Läufer zumindest einen Permanentmagneten oder zumindest ein Rückschlusselement umfasst, sodass sich der Läufer in dem Wanderfeld entlang der Statorteile hin- und herbewegen kann.

Außerdem betrifft die Erfindung eine Fadenführungsvorrichtung für eine Spuleinheit zum Aufspulen von Spulgut auf eine Spule der Spuleinheit, wobei die Fadenführvorrichtung einen Fadenführer umfasst, welcher während des Aufspulens eine Hin- und Herbewegung ausführt, wobei die Fadenführungsvorrichtung einen oben erwähnten Linearmotor aufweist, wobei der Fadenführer der Fadenführungsvorrichtung als Läufer dieses Linearmotors ausgebildet oder mit diesem Läufer verbunden bzw. einstückig mit diesem Läufer ausgebildet ist.

Außerdem betrifft die Erfindung eine Spuleinheit mit einer Fadenführungsvorrichtung. Auch wenn in diesem Dokument von einem "Faden" bzw. einem "Fadenführer etc. die Rede ist, kann das Spulgut grundsätzlich jede beliebige Form aufweisen, solange es aufspulbar bleibt, also fadenförmig, aber auch z.B. bändchenförmig sein.

Elektrische Linearmotoren, bei welchen der Läufer eine Linearbewegung entlang des Stators ausführt, kommen bei zahlreichen Anwendungen zum Einsatz, so zum Beispiel auch bei Fadenführungsvorrichtungen für Spuleinheiten.

Das Dokument WO2009/092122 offenbart einen Linearmotor gemäss dem Oberbegriff des Anspruchs 1. Das Bewegen von Reitern einer Fadenführungsvorrichtung mittels elektromagnetisch strombeaufschlagter Spulen ist beispielsweise aus der EP 1 342 686 B1 bekannt. Dieses Dokument beschreibt eine Fadenführungsvorrichtung zum Aufnehmen gesponnener Garne auf Spulen, im Besonderen für Offenend-Spinnmaschinen. Die Vorrichtung weist eine Reihe von Fadenführern auf, welche mittels eines Antriebsmittels vor der zugeordneten Spule hin- und her bewegt werden können. Das Antriebsmittel ist dabei als Läufer eines elektrischen Linearmotors ausgebildet, wobei der Läufer einen magnetischen Balkenkörper aufweist und auf einem Stator, der einen Balkenkörper mit elektromagnetischen strombeaufschlagten Spulen aufweist, angeordnet ist. Durch Erzeugung eines variablen Magnetfeldes mit dem Stator kann der auf dem Stator beweglich angeordnete Läufer vor der Spule hin- und her bewegt werden.

Der Stator weist über seine gesamte Länge Rollenkörper mit horizontaler Achse auf, auf welchen sich der Läufer abstützt und sich mittels Rollreibung in Längsrichtung entlang dem Stator hin- und her bewegen kann.

Mit einer solchen Anordnung sind allerdings keine besonders hohen Geschwindigkeiten und Beschleunigungen, wie sie bei vielen Anwendungen notwendig sind, möglich, da einerseits die Rollenkörper in etwa auf die Geschwindigkeit des Läufers beschleunigt werden müssen und andererseits bei dieser Anordnung eine große Masse bewegt werden muss. Dementsprechend gibt es Fadenführungsvorrichtungen, bei welchen der Fadenführer selbst als Läufer eines Linearmotors ausgebildet bzw. der einzige Fadenführer einstückig mit dem Linearmotor ausgebildet ist.

Die magnetischen Kräfte die auf den Läufer wirken sind in der Regel so groß, dass dem Thema der Lagerung eines solchen als Läufer ausgebildeten Fadenführers große Bedeutung zukommt, um eine frühzeitige Abnützung oder dauerhafte Beschädigung der Lagerung zu verhindern, welche Reparaturen und somit Standzeiten der Maschine zur Folge hat.

Es ist eine Aufgabe der Erfindung, eine Lagerung für den Läufer bzw. Fadenführer eines elektrischen Linearmotoren bzw. einer Fadenführungsvorrichtung anzugeben, welche in Hinblick auf die oben genannten Probleme bessere Eigenschaften als Lagerungen für Läufer oder Fadenführer von bekannten elektrischen Linearmotoren oder Fadenführungsvorrichtungen aufweist.

Diese Aufgabe wird mit einem Linearmotor gemäss Anspruch 1 gelöst. Im Folgenden ist die Erfindung an Hand der Zeichnung am Beispiel einer Fadenführungsvorrichtung näher erläutert. In dieser zeigt
Fig. 1 schematisch eine perspektivische Darstellung einer Spulvorrichtung mit einer Fadenführungsvorrichtung,
Fig. 2 die für die Erfindung relevanten Komponenten einer ersten Variante einer erfindungsgemäßen Fadenführungsvorrichtung,
Fig. 3 eine Anordnung der Statorteile eine weitere Variante einer erfindungsgemäßen Fadenführungsvorrichtung zur Erzeugung eines Pendelfeldes,
Fig. 4 eine spezielle Anordnung der Gleitflächen zur Bestimmung der Position des Läufers,
Fig. 5 das einem Wanderfeld überlagerte Pendelfeld bei einer Anordnung nach Figur 4, mit unsymmetrischem Läufer,
Fig. 5a schematisch die Pendelbewegung eines Läufers bei seiner Bewegung entlang des Stators,
Fig. 6 eine schematische Detailansicht für eine beispielhafte Lagerung,
Fig. 7 eine schematische Detailansicht eines Läufers zur Verwendung im Rahmen der Erfindung mit symmetrischen Magneten,
Fig. 7a eine Variante eines Läufer mit unsymmetrischen Magneten,
Fig. 7b noch eine weitere Variante eines Läufers mit unsymmetrischen Magneten,
Fig. 8 eine Detailansicht noch einer anderen Variante eines Läufers in einer Draufsicht,
Fig. 8a den Läufer aus Figur 8 in einer Seitenansicht, und
Fig. 8b eine letzte Variante eines Läufers.

Im Folgenden wird die Erfindung an Hand eines Beispiels beschrieben, bei welchem in vorteilhafter Weise die Verwendung eines Pendelfeldes in Kombination mit Gleitflächen an den beiden Statorteilen vorgesehen ist, wobei auch der Läufer mit Gleitflächen versehen ist, mit welchen er an den Gleitflächen des Stators gleiten kann.

Zwei nicht eigens beschriebene Varianten der Erfindung, welche sich aber leicht aus der Beschreibung nachvollziehen lassen, verzichten bei der ersten zusätzlichen Variante auf das Pendelfeld, bei der zweiten zusätzlichen Variante auf die Gleitflächen. Auch diese Varianten können sich gegebenenfalls als vorteilhaft erweisen, insbesondere da dann auf zusätzliche Bauteile und/ oder Steuerungen verzichtet werden kann, die in der Regel optimale Variante ist allerdings jene aus Pendelfeld kombiniert mit Gleitflächen.

Eine dritte zusätzliche Variante, die ebenfalls nicht dargestellt ist, kommt ohne zweite Gleitfläche und ohne Pendelfeld aus.

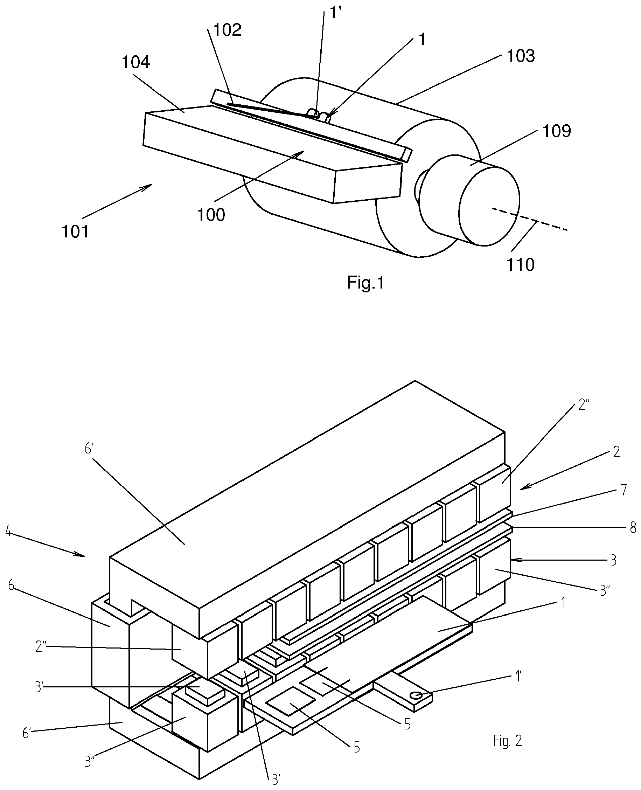

Figur 1 zeigt grob schematisch eine Fadenführungsvorrichtung 100 für eine Spuleinheit 101 zum Aufspulen von fadenförmigem Spulgut 102. Die Spuleinheit umfasst eine Spule 103, auf welche das Spulgut 102 aufgespult wird. Dazu wird die Spule 103 mit einem Antrieb 109, z.B. einem Spindelmotor um ihre Achse 110 gedreht. Angepasst an die Drehbewegung der Spule 103 führt ein Fadenführer das fadenförmige Spulgut 102 in einer Hin- und Herbewegung in bekannter Weise der Spule zu. Das Spulgut 102 ist dabei in einer Fadenführungsaufnahme 1' an dem Fadenführer geführt.

Der Fadenführer selbst ist als Läufer 1 eines elektrischen Linearmotors 104 ausgebildet (bzw. ist der Fadenführer mit dem Läufer verbunden oder einstückig mit diesem ausgebildet), wobei der Läufer 1 zwischen einem ersten Statorteil 2 eines Stators 4 und einem diesem ersten Statorteil 2 gegenüberliegend angeordneten zweiten Statorteil 3 verschiebbar gelagert ist, wie dies in Figur 2 schematisch dargestellt ist. Der Läufer 1 umfasst dabei zumindest einen Permanentmagneten 5, und zumindest der erste Statorteil 2, vorzugsweise beide Statorteile 3 sind zur Erzeugung eines magnetischen Wanderfeldes ausgebildet, in welchem sich der Läufer 1 in Folge seines zumindest einen Permanentmagneten 5 entlang des Stators 4 hin- und her bewegt.

Beispielsweise ist vorgesehen, dass einer der beiden, vorzugsweise beide Statorteile 2, 3 als sogenannter "Induktorkamm" ausgebildet sind, welcher eine Reihe von Spulen/Wicklungen 2", 3" aufweist, mittels welcher durch Anlegen von Strömen ein magnetisches Wanderfeld erzeugt wird, in welchem sich der Läufer 1 entlang des Stators 4 hin- und herbewegen kann. Einer der beiden Statorteile kann prinzipiell auch als Rückschlusselement ausgebildet sein.

Figur 2 zeigt in einer ersten Variante der Erfindung Mittel zum Erzeugen eines magnetischen Pendelfeldes in Form einer Pendelfeld-Wicklung 6. Mit dieser Pendelfeld-Wicklung 6, die vorzugsweise ausschließlich zur Erzeugung des Pendelfeldes dient, kann das Pendelfeld unabhängig von dem Wanderfeld erzeugt werden und die Wanderfeldspulen müssen nicht zusätzlich den für das Pendelfeld zuständigen Strom führen.

Die Pendelfeld-Wicklung 6 ist um ein zugehöriges Joch 6' gewickelt.

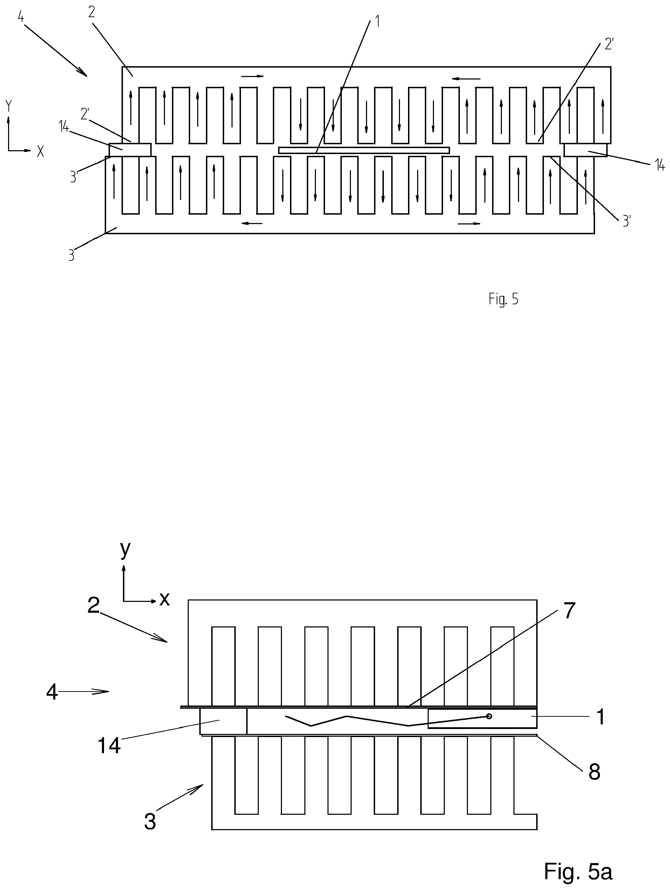

Bei der gezeigten Variante erzeugt das Pendelfeld eine magnetische Kraft auf den oder die Permanentmagneten 5 des Läufers 1 in eine Richtung y normal auf die Richtung x der Hin- und Herbewegung (bezüglich x und y siehe auch Figur 5), derart dass der Läufer 1 zwischen den beiden Statorteilen 2, 3 während seiner Bewegung entlang des Stators 4 (in x-Richtung) eine Pendelbewegung (in y-Richtung) ausführt.

Bei dem Pendelfeld handelt es sich um ein zeitlich veränderliches Magnetfeld, welches abwechselnd in die positive und negative y-Richtung gerichtet ist, sodass dem Läufer während seiner Bewegung entlang der x-Achse in y-Richtung eine Hin- und Herbewegung überlagert wird. Dadurch kann der Läufer um eine Mittellage gehalten werden, in welcher Mittellage sich die Anziehungskräfte in y-Richtung zu den Statoren hin aufheben, sodass den eingangs genannten Problemen optimal begegnet werden kann.

Grundsätzlich geht es bei der Erfindung darum, der Bewegung in x-Richtung eine Bewegung in y-Richtung zu überlagern, um Reibungsverluste zu minimieren. Durch die y-Bewegung kann der störende "Stick-Slip-Effekt" (Haftgleiteffekt) in x-Richtung weitgehend vermieden werden.

Mit einer Fadenführungsvorrichtung bzw. generell mit einem Linearmotor nach der Erfindung können aufgrund der geringen zur Funktion notwendigen Masse des Läufers deutlich höhere Geschwindigkeiten und Beschleunigungen erreicht werden als mit bekannten Vorrichtungen.

Die Pendelfeld-Wicklung 6 erstreckt sich entlang des gesamten Stators 4 bzw. entlang der gesamten Lauflänge des Läufers 1. Unter Lauflänge ist dabei die gesamte Länge entlang des Stators zu verstehen, entlang welcher sich der Läufer bewegen kann. Typischerweise ist diese etwas kürzer als die Länge des Stators oder maximal gleich lang mit dieser.

Der Läufer weist einen Permanentmagneten oder mehrere Permanentmagneten 5 wie gezeigt auf, um auf den Läufer eine Kraft in y-Richtung ausüben zu können.

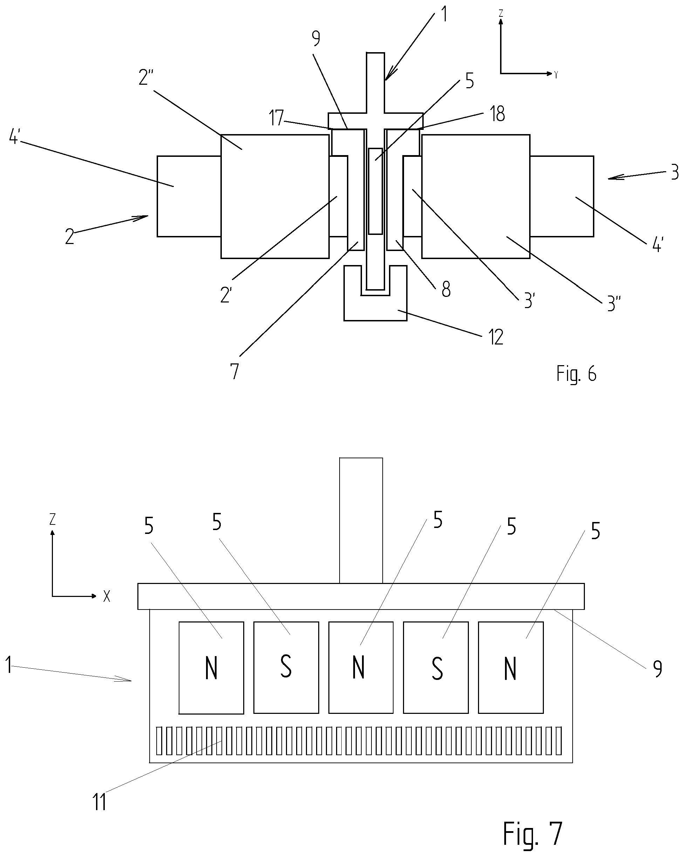

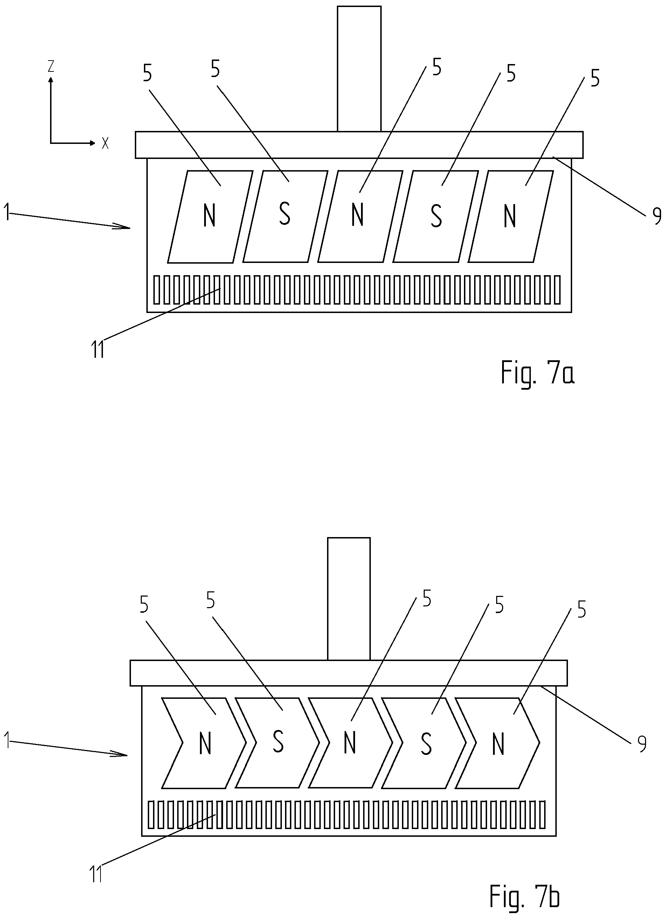

Ein solcher Läufer 1, der in Figur 2 angedeutet ist, ist in Figur 7 in einer detaillierten Ansicht dargestellt, in einer "Draufsicht", d.h. mit Blickrichtung in y-Richtung. In dem hier gezeigten Beispiel weist der Läufer fünf Permanentmagneten 5 auf, deren N-S-Achse jeweils in y-Richtung ausgerichtet sind, sodass an der einen Seite des Läufers, welche in Figur 7 zu sehen ist, drei Nordpole und zwei Südpole liegen und auf der abgewandte Seite zwei Nord- und drei Südpole. Eine solche Anordnung der Permanentmagnete 5 erzeugt eine für die Ausführungsform nach Figur 2 notwendige Magnetisierung des Läufers in y-Richtung, sodass das Pendelfeld der einen Wicklung 6 eine Kraft auf den Läufer 1 ausüben kann.

Der Läufer kann aus Einzelmagneten oder besser aus einem Magneten mit einer entsprechend abwechselnden Magnetisierung wie in Figur 7 aufgebaut sein bzw. solche Magneten bzw. einen einzigen solchen Magneten mit abwechselnder Magnetisierung aufweisen.

Figur 2 zeigt weiters zwei Gleitflächen 7, 8 zwischen den beiden Statorteilen 2, 3, welche sich entlang dieser beiden Statorteile 2, 3 erstrecken und die Statorteile 2, 3, praktisch abdecken, sodass der Läufer 1 die Statorteile 2, 3 während seiner Bewegung nicht berühren kann.

Der Läufer 1 seinerseits weist bei allen Ausführungsformen ebenfalls Gleitflächen 10 auf, welche bei der gezeigten Ausführungsform mit Magneten den bzw. die Permanentmagneten 5 abdecken und mit welchen Gleitflächen 10 der Läufer 1 an den beiden Gleitflächen 7, 8 des Stators 4 gleiten kann.

Die Gleitflächen 7, 8 sind vorzugsweise aus einem harten, gute Gleiteigenschaften aufweisenden Material gebildet, mit Vorteil aus einem nicht metallischen Material wie etwa Kunststoff oder Keramik, oder auch beispielsweise aus nicht ferromagnetischem Edelstahl, oder aus einem weiter oben bereits erwähnten Material. Die Gleitflächen 10 des Läufers sind vorzugsweise aus einem leichten Gleitkunststoff Polyacetale, Teflon oder ähnlichem Material. Zwecks leichter Wartung sollte die Paarung (Leitflächen Stator - Gleitflächen Läufer) so gewählt sein, dass eine Abnutzung hauptsächlich auf der Läufergleitfläche stattfindet.

Die Gleitflächen sind vorzugsweise direkt auf den Statoren 2, 3, und zwar auf den (dem Läufer zugewandten) Statorflächen der Statorpole 2', 3' befestigt.

Genauso sind die Gleitflächen 10 des Läufers vorzugsweise direkt auf den Polflächen der Magnete des Läufers befestigt, sodass diese als Tragkonstruktion der Läufergleitflächen benutzt werden können.

Zwischen den beiden Gleitflächen 7, 8 führt der Läufer 1 in Folge des Pendelfeldes seine der Hin- und Herbewegung überlagerte Pendelbewegung aus. Die Pendelbewegung führt dazu, dass der Läufer abwechselnd an der einen und dann an der anderen Gleitfläche anschlägt. Der Läufer gleitet dabei mit seinen Gleitflächen 10 jeweils kurz an der jeweiligen Gleitfläche 7, 8 des Stators 4, wobei diese Berührung vorzugsweise so kurz wie möglich gehalten ist, und löst sich dann von dieser, bis er die andere Gleitfläche berührt. Die Gleitflächen 7, 8 bilden die Führung für den Läufer in x-Richtung. Die Pendelbewegung dient dazu, den Läufer von einer Gleitfläche zur anderen zu bewegen und dabei von den Gleitflächen so lang wie möglich fern zu halten.

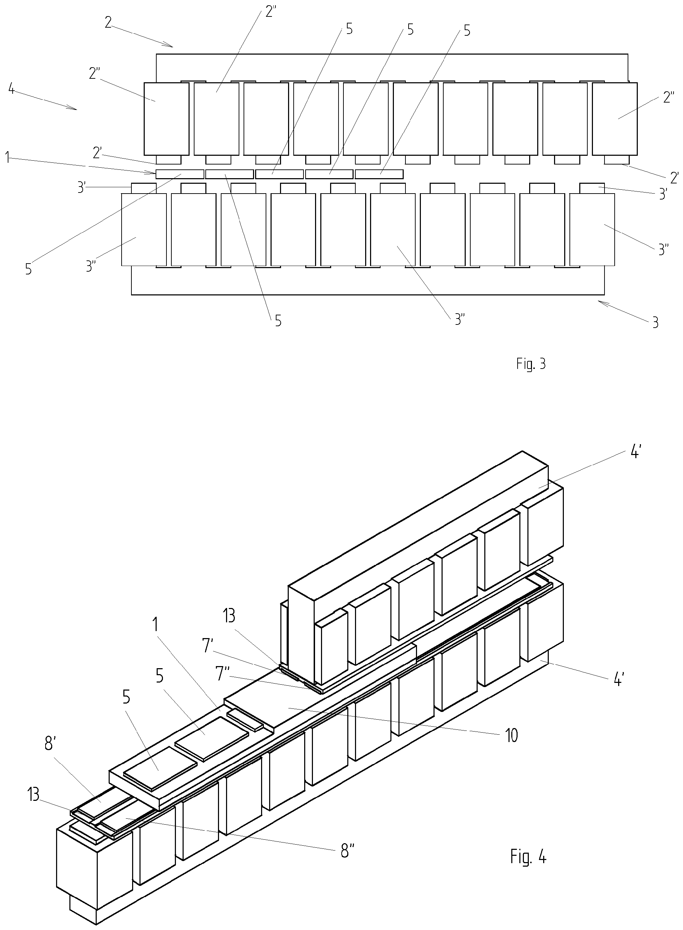

Bei einer anderen Variante der Erfindung, welche in Figur 3 dargestellt ist, fehlt die Wicklung 6 und das Pendelfeld wird von dem Wanderfeld-Stator 4 selbst erzeugt, d.h. dass die Wanderfeldwicklungen des einen oder beider Statorteile 2, 3 zur Erzeugung des Pendelfeldes verwendet werden.

Den Wanderfeldwicklungen des zumindest einen Statorteiles, vorzugsweise beider Statorteile werden elektrische Ströme zur Erzeugung des Pendelfeldes überlagert bzw. werden sie den Strömen zur Erzeugung des Wanderfeldes überlagert

Eine ungleiche Magnetanzahl der Permanentmagneten des Läufers, d.h. eine resultierende Magnetisierung des Läufers in y-Richtung ungleich Null wie in Figur 7 dargestellt wird bei dieser Ausführung nicht benötigt.

Wie oben schon erwähnt ist vorgesehen, dass das Pendelfeld derart generiert bzw. gesteuert wird, dass die beiden Gleitflächen 7, 8 von dem Läufer 1 bei seiner Bewegung entlang der Statorteile 2, 3 abwechselnd berührt werden. Das Pendelfeld wird dabei vorzugsweise derart zeitlich variiert, dass die Berührungen an den Gleitflächen möglichst kurz sind. Um punktuelle Abnützungen zu verhindern ist weiters vorgesehen, dass die Wellenlänge der Pendelbewegung derart gewählt ist, dass sie ungleich der Lauflänge oder einem Vielfachen der Lauflänge des Läufers 1 ist.

Wie Figur 3 zeigt, kann es von Vorteil sein, wenn die Statorpole 2', 3' der einander gegenüberliegenden Statorteile 2, 3 in Bewegungsrichtung des Läufers 1, also in x-Richtung zueinander versetzt sind. Dies gilt unabhängig davon, ob das Pendelfeld mit einer oder mehreren eigenen Wicklungen oder mit den Wanderfeldwicklungen erzeugt wird.

Ein Statorpol 2', 3' besteht dabei aus einer Wicklung 2", 3", welche um ein Statorblechpacket 4' des Stators 4 gewickelt ist (Figur 6).

Durch die versetzte Anordnung gibt es keine bevorzugten Positionen des Läufers entlang des Stators, somit ist der magnetische Rippel entlang des Stators kleiner, wodurch eine gleichmäßige Bewegung des Läufers gewährleistet werden kann.

Alternativ zu der versetzten Anordnung können auch die Magnete (und zwar deren Querschnittsfläche in der x-z-Ebene) des Läufers rhomboidförmig oder anderweitig unsymmetrisch bezüglich Spieglungen um die z-Achse sein, so dass keine Vorzugspositionen vorhanden sind.

Fig. 7a zeigt eine solche rhomboidförmige Anordnung von fünf Permanentmagneten 5.

Figur 7b zeigt eine weitere mögliche Anordnung mit in x-Richtung gepfeilten Magneten 5.

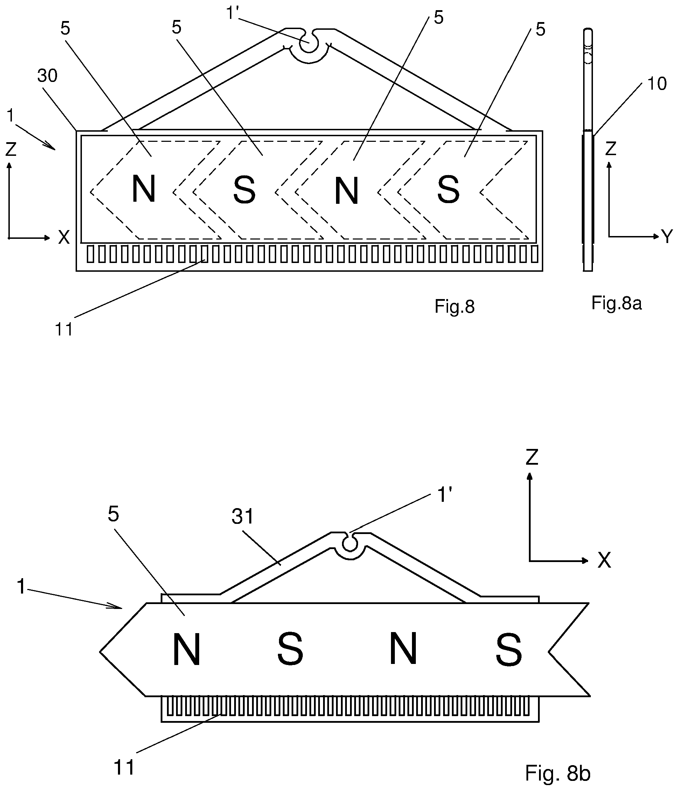

Figur 8 zeigt ebenfalls einen Läufer mit in x-Richtung gepfeilten Magneten 5 zur Verringerung oder Beseitigung des magnetischen Rippels, Figur 8a zeigt den Läufer 1 noch in einer Seitenansicht, gut zu erkennen sind die Gleitflächen 10, welche die Magneten 5 überdecken.

Bei der Variante nach Figur 8, 8a besteht der Läufer 1 aus einem einstückigen Körper 30, welcher die Aufnahme für die Magneten 5 bildet und auch die Fadenführeraufnahme 1' umfasst. Die in dem Körper 30 angebrachten Magneten 5 sind mit einer oder wie dargestellt zwei Gleitflächen 10 abgedeckt.

Figur 8b zeigt eine weitere Variante eines Läufers 1 mit einem Körper 31, welcher die Fadenführungsaufnahme 1' und auch noch Markierungen 11 zur Wegmessung beinhaltet, welche weiter unten noch besprochen werden. An dem Körper 31 ist ein in x-Richtung gepfeilter Magnet 5 mit hier vier abwechselnden Magnetisierungen angebracht, wobei Magnet 5 mit einer Gleitschicht beschichtet ist.

Hinsichtlich der versetzten Statorpole ist insbesondere wie in Figur 3 gezeigt vorgesehen, dass ein Statorpol 2' eines Statorteiles 2 genau zwischen zwei Statorpolen 3' des anderen Statorteiles 3 liegt, d.h. in Bezug auf die Bewegungsrichtung des Läufers 1 sind die Statorpole um jeweils eine halbe Polteilung zueinander versetzt.

Bei der Methode, bei welcher das Pendelfeld mit Wanderfeldwicklung erzeugt wird, kann prinzipiell jede Art von Magnet Verwendung finden.

Figur 5 zeigt schematisch ein überlagertes Pendelfeld (Pfeile in y-Richtung). Bei der gezeigten Variante, bei welcher sowohl das Wanderfeld als auch das Pendelfeld mit dem Stator 4 und ohne zusätzliche Pendelfeldwicklung erzeugt werden, kommen in Abhängigkeit von der Läuferposition unterschiedliche Wicklungen (in Figur 5 sind die Wicklungen nicht dargestellt, sondern nur die Statorpole 2', 3' angedeutet) zum Einsatz, um eine Kraftkomponente in y-Richtung mit gewünschter Ausrichtung zu erzeugen, um die gewünschte Pendelbewegung erzeugen zu können. In Figur 5 sind ein unsymmetrisch magnetisierter Läufer und ein gleichförmiges Magnetfeld über dem Läufer in y-Richtung dargestellt. Bei symmetrischem Läufer hingegen muss das Feld in y-Richtung ungleich über dem Läufer verteilt sein, um eine Kraftkomponente in y-Richtung zu erzeugen.

Durch das Anbringen von zumindest einem Distanzelement 14 zwischen den beiden Statorteilen (zwei Statoren oder Stator und Rückschluss), vorzugsweise zumindest zwei Distanzelementen 14 jeweils an den Enden der Statorteile angeordnet sind (z.B. je ein Distanzelement an einem Ende wie in Figur 5 gezeigt) kann der Luftspalt genau definiert werden. Eine Durchbiegung der Statorteile stellt bei ausreichend steifer Dimensionierung kein Problem dar.

Vorzugsweise sind dabei die Distanzelement 14 in Hinblick auf ihre thermische Ausdehnung auf jene des Läufers abgestimmt, sodass sich das die Distanzelemente 14 analog wie der Läufer ausdehnen, sodass der Luftspalt einerseits erhalten bleibt und so ein Steckenbleiben oder eine zu große Reibung des Läufers verhindert wird, andererseits kann der Luftspalt möglichst klein gehalten werden.

Die oben und im Folgenden beschriebenen Vorteile sind jeweils für die Ausführungsform nur mit Pendelfeld als auch jene nur mit Gleitflächen gültig, von besonderem Vorteil ist es aber, wenn Pendelfeld und Gleitflächen kombiniert werden.

Die immer noch vorhandenen resultierenden magnetischen Kräfte (ungleiche Dicke der Gleitflächen und notwendiger Luftspalt) führen zu einer einseitigen Abnutzung der Gleitflächen und somit auf Dauer zu noch größerer Unsymmetrie, durch eine Pendelbewegung können diese aufgehoben und die Reibung auf beide Gleitflächen verteilt werden. Durch die Pendelbewegung werden beide Gleitflächen in Anspruch genommen, vorzugsweise in möglichst gleichem Ausmaß, sodass die Standzeit der einzelnen Gleitflächen erhöht wird.

Die entsprechende Pendelbewegung des Läufers 1 zwischen den Gleitflächen 7, 8 der beiden Statorteile 2, 3 ist in Figur 5a dargestellt, gut zu erkennen ist die Zick-Zack-Bewegung, die der Läufer 1 bei seiner Bewegung entlang der x-Richtung ausführt.

Die Vorteile der Erzeugung des Pendelfeldes mit den Wanderfeldwicklungen liegen in der Ersparnis der zusätzlichen Wicklung 6 und des Rückschlusselementes 6' (siehe Figur 1) und darin, dass das Pendelfeld wie in Figur 5 dargestellt optimal durch Einsatz der jeweils relevanten Wanderfeldwicklungen erzeugt werden kann.

Weiters gibt es auch keine Einschränkungen bei der Anzahl der Magnete und dem Verhältnis bzw. der Anordnung der Magnetenten in Hinblick auf ihre Nord-Süd-Ausrichtung.

Natürlich geht die Kraft in y-Richtung auf Kosten der Kraft in x-Richtung, da aber für das Pendeln in der Regel nur kleine Kräfte benötigt werden, fällt dies kaum oder gar nicht ins Gewicht.

Werden große Kräfte in x-Richtung benötigt, wie etwa bei der Umkehr der Bewegungsrichtung in x-Richtung, kann in diesem Zeitpunkt das Pendeln auch entfallen und der gesamte Strom für die Bewegung in x-Richtung verwendet werden.

Figur 6 zeigt eine beispielhafte Anordnung eines Läufers 1 zwischen zwei Statorteilen 2, 3 in einem schematischen Schnitt in der (y, z)-Ebene. Zu erkennen sind jeweils eine Wicklung 2", 3" sowie ein Statorblechteil 4', um welches die jeweilige Wicklung 2", 3" angeordnet ist.

Um den Läufer 1 auch in z-Richtung führen bzw. dessen Bewegung begrenzen zu können, ist vorgesehen, dass der Läufer 1 eine weitere Gleitfläche 9 aufweist, mit welcher er auf eine korrespondierende Gleitschicht 17, 18 des Stators 4 in z-Richtung gleitend gelagert ist. Die magnetischen Kräfte der Permanentmagneten können so auch für einen idealen Anpressdruck in z-Richtung sorgen.

Diese Vorspannung in z-Richtung sorgt nicht nur für eine definierte Lage sondern ermöglicht es auch, den Läufer ohne Werkzeug in z-Richtung aus dem Motor zu ziehen und so bei Bedarf auszutauschen. Das ist insbesondere bei einer Anwendung als Fadenführer mit verschiedenen angebauten Fadenführern besonders vorteilhaft, da ein einfacher Tausch durch einfaches Herausziehen der Fadenführer aus dem Statorteil möglich wird.

Beispielsweise sind die Gleitflächen 7, 8 des Stators 4 wie dargestellt zwischen den Statorteilen 2, 3 um 90° umgebogen, um die oben erwähnte korrespondierende Gleitschicht 17, 18 zu erzeugen. Auf diese Weise kann die Führung in Form der Gleitflächen möglichst steif und fest mit dem Stator verbunden werden.

Figur 7 zeigt weiters noch, dass am Läufer 1 Markierungen 11 zur Ermittlung der Position des Läufers 1 in Bewegungsrichtung (x-Richtung) vorgesehen sind. Die Position des Läufers in x-Richtung wird zur Steuerung der Magnetfelder, insbesondere auch des Pendelfeldes verwendet.

Dabei kann es sich um Metallstreifen 11 zur kapazitiven oder magnetischen Positionsmessung oder auch um Löcher zur optischen Überwachung handeln, deren Position mit einer entsprechenden Lageauswertevorrichtung 12 wie in Fig. 6 dargestellt ermittelt und so die x-Position des Läufers 1 genau festgestellt werden kann.

Zur Einstellung der Bewegung in y-Richtung ist die Detektion der Position des Läufers in Hinblick auf die y-Richtung zweckmäßig. Dazu sind verschiedene Möglichkeiten, die alternativ aber auch in beliebigen Kombinationen gemeinsam eingesetzt werden können, vorgesehen:
Es können zur Einstellung der Bewegung des Läufers 1 in y-Richtung Temperatursensoren zur Messung der Temperatur der Gleitflächen 7, 8 vorgesehen sein. Auf diese Weise kann die Reibungswärme in den Gleitflächen mit den Temperatursensoren gemessen werden.

Diese Temperatursensoren können z.B. auf der Rückseite der Gleitflächen 7, 8 des Stators angeordnet sein oder in den Gleitflächen selbst. Beispielsweise kann zwischen jedem Statorpol 2', 3' eines Statorteils 2, 3 ein Temperatursensor angeordnet sein, entweder versetzt bei versetzten Statorpolen, oder gegenüberliegend, und es wird versucht, die Pendelbewegung z.B. derart zu regeln, dass sich bei einander (in etwa) gegenüberliegenden Sensoren die selbe Temperatur einstellt.

Bei dieser Variante kann es von Vorteil sein, wenn die Gleitflächen des Stators gut Wärme leitend sind, beispielsweise aus Messing oder Bronze.

Es kann auch vorgesehen sein, dass kapazitive und/oder induktive Abstandssensoren entlang der x-Richtung verteilt angeordnet sind, um die y-Position des Läufers zu messen.

Es kann auch vorgesehen sein, dass zumindest ein Körperschallmikrofon vorgesehen ist, mittels welchem die Anschläge des Läufers 1 an den Gleitflächen 7, 8 registriert werden können.

Es kann auch vorgesehen sein, dass, wie dies Figur 4 zeigt, jede der beiden Gleitflächen in jeweils zwei elektrisch leitfähige Gleitflächen 7', 7", 8', 8" aufgeteilt ist, und dass Mittel zur Widerstandsmessung in den jeweils zusammengehörenden Gleitflächen 7', 7"; 8', 8" vorgesehen sind.

Berührt der Läufer die Gleitflächen, fließt Strom, was mittels einer Widerstandsmessung an den Gleitflächen festgestellt werden kann. Berührt der Läufer die Gleitfläche, muss das Pendelfeld geändert werden, bis der Läufer die andere Gleitfläche berührt etc.

Figur 4 zeigt auch noch einmal die Gleitfläche 10 des Läufers, welche die Permanentmagneten 5 abdeckt.

Es kann auch vorgesehen sein, dass unter den Gleitflächen 7, 8 oder unter den geteilten Gleitflächen 7', 7", 8', 8", d.h. auf den von dem Läufer 1 abgewandten Seiten der Gleitflächen, elektrisch leitfähige Folien 13 vorgesehen sind und die y-Position des Läufers 1 durch Messung der elektrischen Kapazität der Folien 13 zueinander bestimmt wird.

Je näher der leitfähig, z.B. mit Nickel beschichtete Permanentmagnet (oder die Permanentmagneten) einer Folie kommt (kommen), umso größer ist die Kapazität der Folien zum Magnet und somit auch zueinander.

Schließlich kann auch noch vorgesehen sein, dass zur Einstellung der y-Position des Läufers 1 ein periodischer Kalibriervorgang mit Messung der Reibungsverluste und Speicherung der optimalen Werte durchgeführt wird.

In jeder Position kann der Läufer beschleunigt werden und der zurückgelegte Weg im Auslauf gemessen, je geringer die Reibungsverluste, umso länger der Weg bis zum Stillstand.

## Patentansprüche

1. Linearmotor mit einem Läufer (1), welcher Läufer (1) zwischen einem ersten Statorteil (2) und einem diesem gegenüberliegend angeordneten zweiten Statorteil (3) eines Stators (4) verschiebbar gelagert ist, wobei zumindest einer der beiden Statorteile (2, 3) zur Erzeugung eines magnetischen Wanderfeldes vorgesehen ist, und wobei der Läufer (1) zumindest einen Permanentmagneten (5) oder zumindest ein Rückschlusselement umfasst, sodass sich der Läufer (1) in dem Wanderfeld entlang der Statorteile (2, 3) hin- und herbewegen kann,
**dadurch gekennzeichnet, dass**
Mittel (6; 2, 3) zum Erzeugen eines magnetischen Pendelfeldes vorgesehen sind, welches Pendelfeld eine magnetische Kraft auf den zumindest einen Permanentmagneten (5) oder auf das zumindest eine Rückschlusselement des Läufers (1) in eine Richtung (y) normal auf die Richtung (x) der Hin- und Herbewegung erzeugt, derart dass der Läufer (1) zwischen den beiden Statorteilen (2, 3) während seiner Bewegung entlang des Stators (4) eine Pendelbewegung ausführt.

2. Linearmotor nach Ansprüche 1, **dadurch gekennzeichnet, dass** im Bereich der beiden Statorteile (2, 3) zumindest zwei Gleitflächen (7, 8) vorgesehen sind, und wobei der Läufer (1) zwischen den zumindest zwei Gleitflächen (7, 8) angeordnet und von diesen in Richtung (x) seiner Hin- und Herbewegung geführt ist, und wobei der Läufer (1) zwischen den zumindest zwei Gleitflächen (7, 8) während seiner Bewegung entlang des Stators (4) eine Pendelbewegung ausführt, wobei vorzugsweise die eine oder die mehreren Gleitflächen (7, 8) entlang eines oder entlang beider Statorteile (2, 3) angeordnet sind.

3. Linearmotor nach Anspruch 2, **dadurch gekennzeichnet, dass** die eine oder mehreren Gleitflächen (7, 8) zwischen den beiden Statorteilen (2, 3) angeordnet sind.

4. Linearmotor nach Anspruch 2 oder 3, **dadurch gekennzeichnet, dass** die Gleitflächen (7, 8) unmittelbar an den Statorteilen (2, 3), vorzugsweise direkt auf den Polflächen der Statorteile befestigt sind, beispielsweise mit den Statorteilen, z.B. mit den Polflächen, verklebt sind.

5. Linearmotor nach einem der Ansprüche 1 bis 4, **dadurch gekennzeichnet, dass** der zumindest eine Permanentmagnet (5) oder die mehreren Permanentmagneten (5) derart ausgebildet und/oder angeordnet ist/sind, dass die resultierende Magnetisierung des zumindest einen Permanentmagneten (5) normal auf die Richtung (x) der Hin- und Herbewegung ungleich Null ist.

6. Linearmotor nach einem der Ansprüche 1 bis 5, **dadurch gekennzeichnet, dass** der zweite Statorteil (3) ebenfalls zur Erzeugung eines magnetischen Wanderfeldes ausgebildet ist, oder der zweite Statorteil (3) als Rückschlusselement ausgebildet ist.

7. Linearmotor nach einem der Ansprüche 1 bis 6, **dadurch gekennzeichnet, dass** die Wanderfeldwicklungen des zumindest eines Statorteiles (2, 3) zur Erzeugung des Pendelfeldes verwendet werden.

8. Linearmotor nach einem der Ansprüche 1 bis 7, **dadurch gekennzeichnet, dass** das Pendelfeld derart generiert bzw. gesteuert wird, dass zumindest zwei Gleitflächen (7, 8), zwischen welchen der Läufer (1) bei seiner Bewegung entlang der Statorteile (2, 3) geführt ist, abwechselnd berührt werden.

9. Linearmotor nach einem der Ansprüche 1 bis 8, **dadurch gekennzeichnet, dass** die Wellenlänge der Pendelbewegung derart gewählt ist, dass sie ungleich der Lauflänge oder einem Vielfachen der Lauflänge des Läufers (1) ist.

10. Linearmotor nach einem der Ansprüche 1 bis 9, **dadurch gekennzeichnet, dass** die Statorpole (2', 3') der einander gegenüberliegenden Statorteile (2, 3) in Bewegungsrichtung des Läufers (1) zueinander versetzt sind, wobei vorzugsweise ein Statorpol (2') eines Statorteiles (2) genau zwischen zwei Statorpolen (3') des anderen Statorteiles (3) liegt.

11. Linearmotor nach einem der Ansprüche 2 bis 10, **dadurch gekennzeichnet, dass** der Läufer (1) zumindest an jener Seite oder jenen Seiten, welche einer Gleitfläche (7, 8) des Stators (4) zugewandt sind, eine korrespondierende Gleitfläche (10) aufweist.

12. Linearmotor nach einem der Ansprüche 1 bis 11, **dadurch gekennzeichnet, dass** der Läufer (1) eine Gleitfläche (9) aufweist, mit welcher er auf einer korrespondierende Gleitschicht des Stators (4) in z-Richtung abgestützt gleitend gelagert ist.

13. Linearmotor nach einem der Ansprüche 1 bis 12, **dadurch gekennzeichnet, dass** zur Einstellung der Bewegung des Läufers (1) in y-Richtung Temperatursensoren zur Messung der Temperatur der Gleitflächen (7, 8) vorgesehen sind, und/oder kapazitive und/oder induktive Abstandssensoren entlang der x-Richtung verteilt angeordnet sind, um die y-Position des Läufers zu messen, und/ oder zumindest ein Körperschallmikrofon vorgesehen ist, mittels welchem die Anschläge des Läufers (1) an den Gleitflächen (7, 8) registriert werden können, und/oder die zumindest zwei Gleitflächen (7, 8), zwischen welchen der Läufer (1) sich hin- und herbewegt, in jeweils zwei elektrisch leitfähige Gleitflächen (7', 7", 8', 8") aufgeteilt sind, und dass Mittel zur Widerstandsmessung in den jeweils zusammengehörenden geteilten Gleitflächen (7', 7"; 8', 8") vorgesehen sind, und/oder unter den Gleitflächen (7, 8), d.h. auf den von dem Läufer (1) abgewandten Seiten der Gleitflächen (7, 8), elektrisch leitfähige Folien (13) vorgesehen sind und die y-Position des Läufers (1) durch Messung der elektrischen Kapazität der Folien (13) zueinander bestimmt wird, und/oder zur Einstellung der y-Position des Läufers (1) ein periodischer Kalibriervorgang mit Messung der Reibungsverluste und Speicherung der optimalen Werte durchgeführt wird.

14. Fadenführungsvorrichtung (100) für eine Spuleinheit (101) zum Aufspulen von Spulgut (102) auf eine Spule (103) der Spuleinheit (101), wobei die Fadenführvorrichtung einen Fadenführer umfasst, welcher während des Aufspulens eine Hin- und Herbewegung ausführt,
**dadurch gekennzeichnet, dass**
die Fadenführungsvorrichtung (1) einen Linearmotor (104) nach einem der Ansprüche 1 bis 13 umfasst, wobei der Fadenführer als Läufer (1) dieses Linearmotors (104) ausgebildet oder mit diesem verbunden bzw. einstückig mit diesem ausgebildet ist.

15. Spuleinheit (101) mit einer Fadenführungsvorrichtung (100) nach Anspruch 14.

## Claims

1. A linear motor with a rotor (1) that is mounted so that it can be moved between a first stator part (2) and, arranged opposite it, a second stator part (3) of a stator (4), at least one of the two stator parts (2, 3) being provided to produce a moving magnetic field and the rotor (1) comprising at least one permanent magnet (5) or at least one return element, so that the rotor (1) can move back and forth along the stator parts (2, 3) in the moving field,
**characterized in that**
means (6; 2, 3) are provided to produce an oscillating magnetic field that produces a magnetic force on the at least one permanent magnet (5) or on the at least one return element of the rotor (1) in a direction (y) normal to the direction (x) of the back-and-forth movement, so that the rotor (1) executes an oscillating movement (1) between the two stator parts (2, 3) during its movement along the stator (4).

2. A linear motor according to claim 1, **characterized in that** at least two sliding surfaces (7, 8) are provided in the area of the two stator parts (2, 3), and **in that** the rotor (1) is arranged between the at least two sliding surfaces (7, 8) and is guided by them in the direction (x) of its back-and-forth movement, and the rotor (1) executes an oscillating movement between the at least two sliding surfaces (7, 8) during its movement along the stator (4), the one or more sliding surfaces (7, 8) preferably being arranged along one or along both stator parts (2, 3).

3. A linear motor according to claim 2, **characterized in that** the one or more sliding surfaces (7, 8) are arranged between the two stator parts (2, 3).

4. A linear motor according to claim 2 or 3, **characterized in that** the sliding surfaces (7, 8) are fastened directly to the stator parts (2, 3), preferably directly to the pole faces of the stator parts, for example cemented with the stator parts, e.g., with the pole faces.

5. A linear motor according to one of claims 1 through 4, **characterized in that** the at least one permanent magnet (5) or the multiple permanent magnets (5) is/are designed and/or arranged so that the resulting magnetization of the at least one permanent magnet (5) normal to the direction (x) of the back-and-forth movement is not equal to zero.

6. A linear motor according to one of claims 1 through 5, **characterized in that** the second stator part (3) is also designed to produce a moving magnetic field, or the second stator part (3) is in the form of a return element.

7. A linear motor according to any one of claims I through 6, **characterized in that** the moving field windings of the at least one stator part (2, 3) are used to produce the oscillating field.

8. A linear motor according to any one of claims 1 through 7, **characterized in that** the oscillating field is generated or controlled in such a way that at least two sliding surfaces (7, 8) between which the rotor (1) is guided during its movement along the stator parts (2, 3) are alternately contacted.

9. A linear motor according to any one of claims 1 through 8, **characterized in that** the wavelength of the oscillating movement is selected in such a way that it is not equal to the run length or a multiple of the run length of the rotor (1).

10. A linear motor according to any one of claims 1 through 9, **characterized in that** the stator poles (2', 3') of the stator parts (2, 3) that are opposite one another are offset to one another in the direction of motion of the rotor (1), one stator pole (2') of a stator part (2) preferably lying exactly between two stator poles (3') of the other stator part (3).

11. A linear motor according to any one of claims 2 through 10, **characterized in that** the rotor (1) has a corresponding sliding surface (10), at least on the side(s) that face(s) a sliding surface (7, 8) of the stator (4).

12. A linear motor according to any one of claims 1 through 11, **characterized in that** the rotor (1) has a sliding surface (9) with which it is mounted so that it can slide on a corresponding sliding layer of the stator (4), supported in the z-direction.

13. A linear motor according to any one of claims 1 through 12, **characterized in that** to adjust the movement of the rotor (1) in the y-direction, temperature sensors are provided to measure the temperature of the sliding surfaces (7, 8), and/or capacitive and/or inductive gap sensors are arranged distributed along the x-direction to measure the y-position of the rotor, and/or at least one contact microphone is provided, by means of which the impacts of the rotor (1) against the sliding surfaces (7, 8) can be recorded, and/or the at least two sliding surfaces (7, 8), between which the rotor (1) moves back and forth are each divided into two electrically conductive sliding surfaces (7', 7", 8', 8"), and that means are provided for measuring resistance in each of the associated divided sliding surfaces (7'. 7"; 8', 8"), and/or electrically conductive foils (13) are provided under the sliding surfaces (7, 8), i.e., on the sides of the sliding surfaces (7, 8) facing away from the rotor (1), and the y-position of the rotor (1) is determined by measuring the electrical capacitance of the films (13) to one another, and/or to adjust the y-position of the rotor (1) a periodic calibration process is performed with measurement of the frictional losses and storage of the optimal values.

14. Thread guide device (100) for a winding head (101) to wind up material to be wound (102) on a bobbin (103) of the winding head (101), the thread guide device comprising a thread guide which executes a back-and-forth movement during the winding up,
**characterized in that**
the thread guide device (1) comprises a linear motor (104) according to any one of claims 1 through 13, wherein the thread guide is in the form of a rotor (1) of this linear motor (104) or is connected with it or is made in a single piece with it.

15. A winding head (101) with a thread guide device (100) according to claim 14.

## Revendications

1. Moteur linéaire comportant un rotor (1), lequel rotor (1) est monté déplaçable entre une première partie de stator (2) et une seconde partie de stator (3) disposée à l'opposé de celle-ci d'un stator (4), au moins l'une des deux parties de stator (2, 3) étant prévue pour la génération d'un champ magnétique à ondes progressives, et le rotor (1) comportant au moins un aimant permanent (5) ou au moins un élément de culasse de reflux, de telle sorte que le rotor (1) peut se déplacer en va-et-vient dans le champ magnétique à ondes progressives le long des parties de stator (2, 3),
**caractérisé par le fait que**
des moyens (6 ; 2, 3) sont prévus pour la génération d'un champ pendulaire magnétique, lequel champ pendulaire génère une force magnétique sur le au moins un aimant permanent (5) ou sur le au moins un élément de culasse de reflux du rotor (1) dans une direction (y) perpendiculaire à la direction (x) du mouvement de va-et-vient, de telle sorte que le rotor (1) exécute un mouvement pendulaire entre les deux parties de stator (2, 3) pendant son mouvement le long du stator (4).

2. Moteur linéaire selon la revendication 1, **caractérisé par le fait que,** dans la région des deux parties de stator (2, 3), au moins deux surfaces de glissement (7, 8) sont prévues, et dans lequel le rotor (1) est disposé entre les au moins deux surfaces de glissement (7, 8) et son mouvement de va-et-vient est guidé par celles-ci dans la direction (x), et dans lequel le rotor (1) exécute un mouvement pendulaire entre les au moins deux surfaces de glissement (7, 8) pendant son mouvement le long du stator (4), dans lequel, de préférence, la ou les différentes surfaces de glissement (7, 8) sont disposées le long d'une ou le long des deux parties de stator (2, 3).

3. Moteur linéaire selon la revendication 2, **caractérisé par le fait que** la ou les différentes surfaces de glissement (7, 8) sont disposées entre les deux parties de stator (2, 3).

4. Moteur linéaire selon l'une des revendications 2 ou 3, **caractérisé par le fait que** les surfaces de glissement (7, 8) sont fixées directement sur les parties de stator (2, 3), de préférence directement sur les surfaces polaires des parties de stator, par exemple sont collées avec les parties de stator, par exemple avec les surfaces polaires.

5. Moteur linéaire selon l'une des revendications 1 à 4, **caractérisé par le fait que** le au moins un aimant permanent (5) ou les différents aimants permanents (5) est/sont formés et/ou disposés de telle sorte que la magnétisation résultante du moins un aimant permanent (5) perpendiculairement à la direction (x) du mouvement de va-et-vient est non nulle.

6. Moteur linéaire selon l'une des revendications 1 à 5, **caractérisé par le fait que** la seconde partie de stator (3) est formée également pour la génération d'un champ magnétique à ondes progressives, ou la seconde partie de stator (3) est formée en tant qu'élément de culasse de reflux.

7. Moteur linéaire selon l'une des revendications 1 à 6, **caractérisé par le fait que** les bobinages de champ magnétique à ondes progressives de la au moins une partie de stator (2, 3) sont utilisés pour la génération du champ pendulaire.

8. Moteur linéaire selon l'une des revendications 1 à 7, **caractérisé par le fait que** le champ pendulaire est généré ou commandé de telle sorte qu'au moins deux surfaces de glissement (7, 8) entre lesquelles le rotor (1) est guidé lors de son mouvement le long des parties de stator (2, 3), sont touchées de façon alternée.

9. Moteur linéaire selon l'une des revendications 1 à 8, **caractérisé par le fait que** la longueur d'onde du mouvement pendulaire est choisie de telle sorte qu'elle est différente de la longueur de course ou d'un multiple de la longueur de course du rotor (1).

10. Moteur linéaire selon l'une des revendications 1 à 9, **caractérisé par le fait que** les pôles de stator (2', 3') des parties de stator (2, 3) opposées l'une à l'autre sont décalés l'un par rapport à l'autre dans la direction de mouvement du rotor (1), où, de préférence, un pôle de stator (2') d'une partie de stator (2) se trouve exactement entre deux pôles de stator (3') de l'autre partie de stator (3).

11. Moteur linéaire selon l'une des revendications 2 à 10, **caractérisé par le fait que** le rotor (1) présente une surface de glissement (10) correspondante au moins sur ce côté ou sur ces côtés qui sont tournés vers une surface de glissement (7, 8) du stator (4).

12. Moteur linéaire selon l'une des revendications 1 à 11, **caractérisé par le fait que** le rotor (1) présente une surface de glissement (9), avec laquelle il est monté de manière glissante soutenu dans la direction z sur une couche de glissement correspondante du stator (4).

13. Moteur linéaire selon l'une des revendications 1 à 12, **caractérisé par le fait que,** pour le réglage du mouvement du rotor (1) dans la direction y, des capteurs de température sont prévus pour la mesure de la température des surfaces de glissement (7, 8), et/ou des capteurs de distance capacitifs et/ou inductifs sont disposés de façon répartie le long de la direction x, afin de mesurer la position y du rotor, et/ou au moins un microphone pour bruits d'impact est prévu, au moyen duquel les butées du rotor (1) contre les surfaces de glissement (7, 8) peuvent être enregistrées, et/ou les au moins deux surfaces de glissement (7, 8), entre lesquelles le rotor (1) réalise un mouvement de va-et-vient, sont divisées chacune en deux surfaces de glissement conductrices de l'électricité (7', 7", 8', 8"), et que des moyens sont prévus pour la mesure de résistance dans les surfaces de glissement (7', 7" ; 8', 8") divisées de façon conjuguée respectives, et/ou sous les surfaces de glissement (7, 8), à savoir sur les côtés des surfaces de glissement (7, 8) opposés au rotor (1), des films (13) conducteurs de l'électricité sont prévus et la position y du rotor (1) est déterminée par la mesure de la capacité électrique des films (13) entre eux, et/ou pour le réglage de la position y du rotor (1), un processus d'étalonnage périodique est réalisé avec la mesure des pertes par friction et la mémorisation des valeurs optimales.

14. Dispositif guide-fil (100) pour une unité à bobine (101) pour le bobinage de matériau à bobiner (102) sur une bobine (103) de l'unité à bobine (101), le dispositif guide-fil comportant un guide-fil, lequel exécute un mouvement de va-et-vient pendant le bobinage,
**caractérisé par le fait que**
le dispositif guide-fil (1) comporte un moteur linéaire (104) selon l'une des revendications 1 à 13, le guide-fil étant formé en tant que rotor (1) de ce moteur linéaire (104) ou étant formé lié à celui-ci ou d'un seul tenant avec celui-ci.

15. Unité de bobine (101) ayant un dispositif guide-fil (100) selon la revendication 14.
